# EUROPEAN PATENT SPECIFICATION

(11) **EP 0 687 817 B1**
(45) Date of publication and mention of the grant of the patent: **04.11.1998**
(21) Application number: 95303473.3
(22) Date of filing: 22.05.1995
(51) Int. Cl.: F15B 13/00

(54) **Pilot type electromagnetic valve**
Elektromagnetisches Schaltventil
Soupape de commande électromagnétique

(30) Priority: 17.06.1994 JP 159259/94
(43) Date of publication of application: 20.12.1995
(73) Proprietor: SMC CORPORATION, Minato-ku Tokyo 105 (JP)
(72) Inventor: Miyazoe, Shinji, c/o SMC Corp., Tsukuba Tech.Cent., Tsukuba-gun, Ibaraki (JP); Ishikawa, Makoto, c/oSMC Corp., Tsukuba Tech.Cent., Tsukuba-gun, Ibaraki (JP)
(74) Representative: Allam, Peter Clerk

(56) References cited:
- EP-A- 0 231 696
- EP-A- 0 423 899
- DE-A- 3 917 528
- DE-A- 4 309 695
- US-A- 4 387 739

## Description

This invention relates to a pilot type electromagnetic valve with a simplified power supply assembly.

There are well known in the art the so-called pilot type electromagnetic valves which have, in combination with a main valve section with a main valve body for switching the flow direction of a main fluid, an electromagnetically operated pilot valve section for switching the position of the main valve body by the action of a pilot fluid pressure. Such pilot type electromagnetic valves are known, for instance, from DE-A-3 917 528.

In the known pilot type electromagnetic valve of this sort, electric power is supplied to the pilot valve section through a printed wiring board which is mounted on a pilot valve assembly, the printed wiring board having electrical parts such as resistors, indicator lamps, counter emf inhibitor and so forth assembled into a printed power supply circuit.

In this connection, it has been the usual practice to make electrical connections between the printed wiring board and the pilot valve section by way of a predetermined number of jack type terminals which are provided on a part of the printed wiring board, and pin type coil terminals projected from a solenoid coil in the pilot valve section for insertion into the jack terminals by press-in fitting engagement therewith. Therefore, upon inspection or replacement of the pilot valve section, each time there arises a necessity for unplugging and plugging the coil terminals from and into the jack terminals on the printed wiring board. These troublesome unplugging and plugging procedures are not only time-consuming, but also are very likely to cause bending deformations or breakage or other damage to the pin type coil terminals which are subjected to distorting or straining forces each time they are unplugged and plugged in.

In addition, with a certain type of electromagnetic valve it is required to ground the pilot valve by way of a grounding terminal which is provided on the printed wiring board. In such a case, it is desirable to employ an arrangement which will permit the pilot valve section to be connected to the grounding terminal securely in a facilitated manner.

It is therefore an object of the present invention to provide a pilot type electromagnetic valve with a power supply assembly which is arranged to facilitate electrical connections and disconnections of a printed wiring board of the power supply relative to a pilot valve section.

A pilot type electromagnetic valve according to the present invention includes a main valve section incorporating a main valve body for switching the flow direction of a main fluid, an electromagnetically operated pilot valve section for switching the position of the main valve body by the action of a pilot fluid pressure, and a power supply for supplying current to the pilot valve section, characterized in that the pilot valve section includes a pair of coil terminals connected to a solenoid coil and accommodated in projected state within a pilot valve case mounted on the main valve section, and conducting springs fitted on the coil terminals as resilient contacts; and the power supply comprises current receiving terminals mounted on a terminal plate adapted to serve also as a lid for the pilot valve case, and a printed wiring board supporting thereon an electrical power supply circuit and mounted on the terminal plate with the current receiving terminals and the power supply circuit in conductive state, the power supply circuit and coil terminals being electrically connected with each other through the conducting springs upon mounting the terminal plate on the pilot valve case.

In a preferred embodiment of the invention, a grounding terminal is mounted on the terminal plate and the printed wiring board, and a grounding spring is fitted on the fore end of the grounding terminal in such a way that the grounding terminal is electrically connected to the pilot valve section through the grounding spring upon mounting the terminal plate on the pilot valve case.

With the above-described preferred pilot type electromagnetic valve according to the invention, after mounting the pilot valve section within the pilot valve case at one end of the main valve section, the terminal plate which has the printed wiring board attached thereon is set in an opening in the pilot valve case, whereupon the conducting springs on the coil terminals are pressed against the power supply circuit on the printed wiring board to complete the electrical connections between the coil terminals and the power supply circuit for supplying current from the current receiving terminals to the pilot valve section through the printed wiring board.

In this instance, the coil terminals and the printed wiring board are connected with each other through the resiliently contacting actions of the conducting springs, so that there is no possibility of the coil terminals being subjected to distorting or straining forces at the time of mounting the terminal plate on the pilot valve case. Therefore, it becomes possible to prevent damage to the coil terminals which might be caused by repeated mounting and dismantling of the terminal plate.

Further, since the printed wiring board is mounted on the terminal plate instead of the pilot valve assembly, the pilot valve assembly can be mounted in an arbitrary manner with a greater freedom in structural designs exempt from the limitations which would be imposed were the printed wiring board to be mounted on the pilot valve assembly in the usual manner, coupled with an advantage that the maintenance and service of the pilot valve section becomes easier since the printed wiring board can be detached therefrom upon dismantling the terminal plate.

Moreover, as soon as the terminal plate is mounted on the pilot valve case, the grounding spring at the fore end of the grounding terminal on the terminal plate is pressed against a predetermined grounding structure of the pilot valve section, precluding the necessity for modifying the construction of the pilot valve section specifically for this purpose.

The invention will now be described further with reference to the accompanying drawings, in which :
Fig. 1 is a longitudinal section of a preferred embodiment of the pilot type electromagnetic valve according to the present invention;
Fig. 2 is an exploded perspective view of major components of the electromagnetic valve shown in Fig. 1; and
Fig. 3 is a sectional view illustrating the manner of assembling the power supply section of the electromagnetic valve.

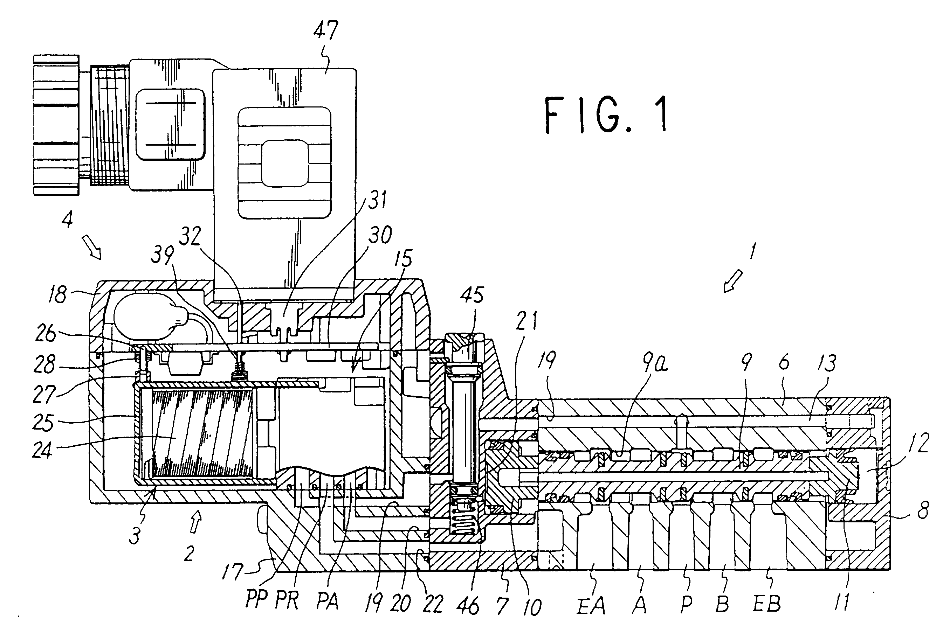

Shown in Fig. 1 is a preferred embodiment of pilot type electromagnetic valve according to the invention, which is largely constituted by a main valve section 1 incorporating a main valve body 9 for switching the flow direction of a main fluid, an electromagnetically operated pilot valve section 2 for switching the position of the main valve body 9 by the action of a pilot fluid pressure, and a power supply section 4 for supplying current to a solenoid portion 3 of the pilot valve section 2.

The main valve section 1 includes a main valve casing 6 which is provided with an inlet port P for a pressurized fluid such as compressed air, output ports A and B, exhaust ports EA and EB, a valve bore 9a into which the respective ports are opened, and first and second piston cases 7 and 8 which are attached to the opposite ends of the valve casing 6 by suitable means.

A spool type main valve body 9 is slidably received in the valve bore 9a to establish or block communication of the inlet port P with the output ports A or B and at the same time to establish or block communication of the output ports A and B with the exhaust ports EA and EB, respectively, by its sliding movements within the valve bore 9a. Abutted against one axial end of the main valve body 9 is a first piston 10 of a larger diameter which is slidably fitted in the piston case 7, while the other axial end of the main valve body 9 is in abutting engagement with a second piston 11 of a smaller diameter which is slidably fitted in the piston case 8. A return chamber 12 which is defined behind the second piston 11 is communicated with the inlet port P through a return flow passage 13.

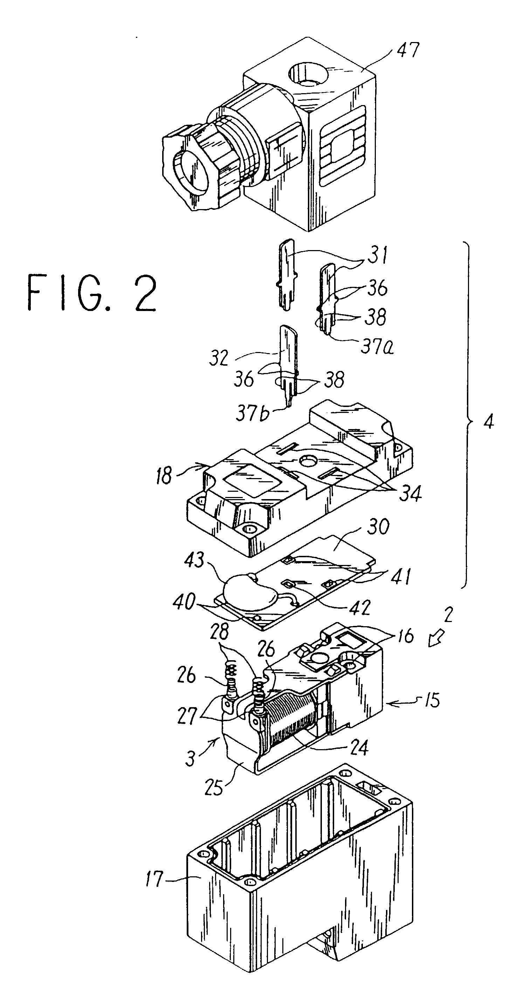

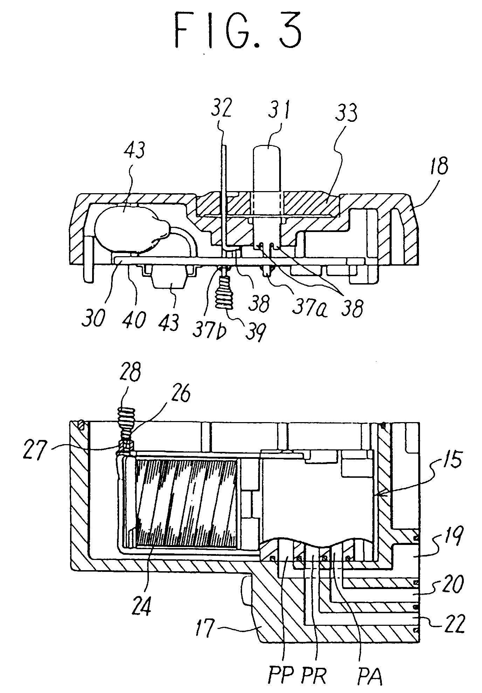

As seen in Figs. 2 and 3, the pilot valve section 2 is arranged in the form of a known 3-port electromagnetic valve which selectively communicates a pilot output port PA in its change-over valve portion 15 either with a pilot inlet port PP or a pilot exhaust port PR upon energizing or de-energizing a coil 24 in its solenoid portion 3. This pilot valve assembly 2 is mounted in a pilot valve case 17 by a number of bolts (not shown) which are passed through mounting holes 16 in the above-mentioned switching portion 15. The pilot valve case 17 which is open on the upper side is mounted on the first piston case 7 of the main valve section 1 by suitable means.

The pilot inlet port PP is communicated with the inlet port P of the main valve section by a pilot supply passage 19 which is routed from the pilot valve-case 17 through the first piston case 7 and the main valve casing 6. The pilot output port PA is communicated with a drive chamber 21 behind the first piston 10 through a pilot output passage 20 which is formed in the pilot valve case 17 and the first piston case 7. The pilot exhaust port PR is communicated with the outside through a pilot exhaust passage 22 which is provided in the pilot valve case 17 and the main valve casing 6.

The solenoid portion 3 of the pilot valve 2 is of known arrangement including a coil 24 wound on a bobbin (not shown), a magnetic frame 25 which covers the coil 24, and fixed and movable iron cores (neither shown). At one side of the solenoid portion 3, a pair of pin-shaped coil terminals 26 which are electrically connected to the above-mentioned coil 24 are projected above the magnetic frame 25. The coil terminals 26 have protective rubber tubes 27 fitted on the respective base portions and at the same time have conducting springs 28 fitted on the respective upper ends to serve as resilient contacts.

A terminal plate 18, which also serves as a lid to be fitted in an opening on the top side of the pilot valve case 17, includes a recess which is formed on the side of the pilot valve case 17 for mounting a printed wiring board 30, and terminal holes 34 which are arranged to receive loosely therein current receiving terminals 31 and a grounding terminal 32.

As shown in Fig. 2, the current receiving terminals 31 and grounding terminal 32 are each provided with stopper portions 36 which are formed at the opposite sides of a longitudinally intermediate portion of a strip-like body, a connecting portion 37a or 37b which is formed in a fore end portion to be passed through the terminal hole 34, and bending tab portions 38 which are formed at the opposite sides of the connecting portion. A grounding spring 39 in the form of a conducting coil spring is fitted on the connecting portion 37b of the grounding terminal 32.

The printed wiring board 30 which constitutes part of the power supply section 4 has an electrical power supply circuit printed on an electrically insulating substrate in a well-known manner, with necessary electrical and electronic parts 43 assembled into the power supply circuit for energization of the solenoid section 3. Formed in part of the power supply circuit are conducting portions 40 to be electrically connected to the coil terminals 31 through the resiliently contacting conducting springs 28, terminal connector holes 41 which engage with the current receiving terminals 31, and a terminal holder hole 42 which engages the grounding terminal 32.

A manual operation button 45 which is provided on the first piston case 7 is normally urged upward (as viewed in the drawing) by means of a spring 46 to open the pilot supply passage 19. When the manual button 45 is depressed, the pilot supply passage 19 is communicated directly with the drive chamber 21 without passing through the pilot valve section 2.

In the drawing, the reference numeral 47 denotes a feeder terminal box.

For assembling the pilot type electromagnetic valve of the above construction, firstly the pilot valve section 2 is assembled into the pilot valve case 17, which is mounted on the main valve section 1, prior to assembling the power supply section 4 in position on the pilot valve section.

Thereafter, the fore end portions of the current receiving terminals 31 and grounding terminal 32 are inserted into the respective terminal holes 34 in the terminal plate 18 until the stopper portions 36 are brought into abutting engagement with marginal edge portions of the terminal holes 34, and then the bending tab portions 38 are bent toward the terminal plate 18 to hold the respective terminals securely thereon.

Nextly, the connecting portions 37a of the current receiving terminals 31 and the connecting portion 37b of the grounding terminal 32 are respectively inserted into the terminal connector holes 41 and the terminal holder hole 42 of the printed wiring board 30 and electrically connected by soldering to the power supply circuit on the printed wiring board 30. By so doing, the printed wiring board 30 itself is simultaneously assembled with the terminal plate 18. The conductive grounding spring 39 is then fitted on the connecting portion 37b of the above-described grounding terminal 32.

The terminal plate 18, which has been assembled with the printed wiring board 30, is fixed on the pilot valve case 17 by means of mounting bolts (not shown), whereupon the conducting springs 28 on the coil terminals 26 are resiliently pressed against conducting portions 40 on the printed wiring board 30 to connect the power supply circuit with the coil 24 of the solenoid section 2. Simultaneously, the grounding spring 39 on the grounding terminal 32 is pressed against the magnetic frame 25.

Thus, the current supply from the current receiving terminals 31 to the coil 24 becomes feasible, and at the same time the solenoid section 2 is connected to the grounding terminal 32.

With the pilot type electromagnetic valve of the above-described construction, upon supplying current to the coil 24 of the pilot valve in the position shown in Fig. 1, the pilot input port PP is brought into communication with the pilot output port PA to supply the pilot fluid to the drive chamber 21. As a consequence, the main valve body 9 is moved to the right (as viewed in the drawing), communicating the inlet port P with the output port A while communicating the output port B with the exhaust port EB. In this position, the output compressed air appears at the output port A.

Upon cutting off the current supply to the coil 24, the pilot output port PA is communicated with the pilot exhaust port PR to discharge the pilot air in the drive chamber 21 to the outside, whereupon the main valve body 9 is returned to the position shown in the drawing under the influence of the return fluid pressure prevailing in the return chamber 12, communicating the inlet port P with the output port B while communicating the output port A with the exhaust port EA. In this position, the output compressed air appears at the output port B.

Thus, since the printed wiring board 30 is assembled with the terminal plate 18, the pilot type electromagnetic valve of the above-described construction is exempted from the restrictions which would be imposed with regard to the manner of mounting the pilot valve section 2 on the pilot valve case 17 were the printed wiring board 30 to be supported on the pilot valve section 2. Besides, upon dismantling the terminal plate 18 from the pilot valve case 17, the printed wiring board 30 is removed simultaneously along with the terminal plate 18 to make the maintenance of the pilot valve section 2 easier. Further, the arrangement which electrically connects the coil terminals 26 to the printed wiring board 30 through the resiliently contacting conducting springs 28 helps to preclude in a reliable manner the damages which might be caused to the coil terminals 26 by imposition of distorting or straining forces at the time of mounting and dismantling the terminal plate 18 on and off the pilot valve case 17.

Moreover, the grounding terminal 32 is automatically connected to the solenoid section 3 through the grounding spring 39 upon mounting the terminal plate 18 in position on the pilot valve case. This makes it possible to ground the solenoid portion 3 without necessitating any machining operations especially for this purpose.

## Claims

1. A pilot type electromagnetic valve, including a main valve section (1) incorporating a main valve body (9) for switching the flow direction of a main fluid, an electromagnetically operated pilot valve section (2) for switching the position of said main valve body by the action of a pilot fluid pressure, and a power supply (4) for supplying current to said pilot valve section, characterized in that:
said pilot valve section (2) comprises a pair of coil terminals (26) connected to a solenoid coil (24) and accommodated in projected state within a pilot valve case (17) mounted on said main valve section, and conducting springs (28) fitted on said coil terminals as resilient contacts; and
said power supply (4) comprises current receiving terminals (31) mounted on a terminal plate (18) adapted to serve also as a closure lid for said pilot valve case (17), and a printed wiring board (30) supporting thereon an electrical power supply circuit (40, 43) and mounted on said terminal plate (18) with said current receiving terminals (41) and said power supply circuit in conductive state;
said power supply circuit (40, 43) and coil terminals (41) being electrically connected with each other through said conducting springs (28) upon mounting said terminal plate (18) on said pilot valve case (17).

2. A pilot type electromagnetic valve as defined in claim 1, wherein a grounding terminal (32) is mounted on said terminal plate (18) and said printed wiring board (30), and a grounding spring (39) is fitted on a fore end portion of said grounding terminal (32) in such a way that said grounding terminal (32) is electrically connected to said pilot valve section (2) through said grounding spring (39) upon mounting said terminal plate (18) on said pilot valve case (17).

## Patentansprüche

1. Elektromagnetisches Schaltventil, mit einem Hauptventilabschnitt (1), der einen Hauptventilkörper (9) zum Schalten der Fließrichtung eines Hauptfluids, einen elektromagnetisch betriebenen Schaltventilabschnitt (2) zum Schalten der Stellung des Hauptventilkörpers durch die Wirkung eines Schaltfluiddrucks und eine Stromversorgung (4) zum Liefern von Strom an den Schaltventilabschnitt enthält, dadurch gekennzeichnet, daß:
der Schaltventilabschnitt (2) ein Paar von Spulenanschlüssen (26), die mit einer Zylinderspule (24) verbunden und in einem vorstehenden Zustand innerhalb eines Schaltventilgehäuses (17) eingebaut sind, das auf dem Hauptventilabschnitt angebracht ist, und leitende Federn (28), die auf die Spulenanschlüsse als federnde Kontakte aufgesetzt sind, aufweist; und
die Stromversorgung (4) stromaufnehmende Anschlüsse (31), die auf einer Anschlußplatte (18) angebracht sind, die angepaßt ist, um auch als Verschlußdeckel für das Schaltventilgehäuse (17) zu dienen, und eine gedruckte Schaltung (30) aufweist, die darauf eine elektrische Stromversorgungsschaltung (40,43) trägt und an der Anschlußplatte (18) angebracht ist,
wobei sich die stromaufnehmenden Anschlüsse (41) und die Stromversorgungsschaltung im leitenden Zustand befinden;
wobei die Stromversorgungsschaltung (40,43) und Spulenanschlüsse (41) miteinander durch die leitenden Federn (28) auf das Anbringen der Anschlußplatte (18) auf dem Schaltventilgehäuse (17) hin elektrisch verbunden sind.

2. Elektromagnetisches Schaltventil nach Anspruch 1, wobei ein Erdungsanschluß (32) an der Anschlußplatte (18) und der gedruckten Schaltung (30) angebracht ist, und eine Erdungsfeder (39) auf einen vorderen Endabschnitt des Erdungsanschlusses (32) auf eine solche Art aufgesetzt ist, daß der Erdungsanschluß (32) elektrisch mit dem Schaltventilabschnitt (2) durch die Erdungsfeder (39) auf das Anbringen der Anschlußplatte (18) an dem Schaltventilgehäuse (17) hin verbunden ist.

## Revendications

1. Valve électromagnétique du type à pilote, comprenant une section de valve principale (1), comportant un corps de valve principale (9) pour commuter le sens d'écoulement d'un fluide principal, une section de valve pilote (2) à commande électromagnétique, pour commuter la position du corps de valve principale sous l'action d'une pression de fluide pilote, et une alimentation en courant (4) pour alimenter la section de valve pilote en courant, caractérisée en ce que :
la section de valve pilote (2) comprend deux bornes de bobine (26), connectées à une bobine d'électroaimant (24) et logées à l'état en saillie dans un boîtier de valve pilote (17) assemblé sur la section de valve principale, et des ressorts conducteurs (28) montés sur les bornes de bobine en tant que contacts électriques ; et
la source de courant (4) comprend des bornes de réception de courant (31), montées sur une plaque de bornes (18) adaptée pour servir aussi de couvercle de fermeture pour le boîtier de valve pilote (17), et une plaquette de circuit imprimé (30) portant sur elle un circuit d'alimentation en courant électrique (40, 43) et montée sur la plaque de bornes (18) avec les bornes de réception de courant (41) et le circuit d'alimentation en courant dans un état conducteur ;
le circuit d'alimentation en courant (40, 43) et les bornes de bobine (41) étant connectés électriquement entre eux par l'intermédiaire des ressorts conducteurs (28) lors de l'assemblage de la plaque de borne (18) sur le boîtier de valve pilote (17).

2. Valve électromagnétique du type à pilote telle que définie à la revendication 1, dans laquelle une borne de mise à la masse (32) est montée sur la plaque de bornes (18) et la plaquette de circuit imprimé (30), et un ressort de mise à la masse (39) est monté sur une partie d'extrémité avant de la borne de mise à la masse (32) d'une manière telle que la borne de mise à la masse (32) est connectée électriquement à la section de valve pilote (2) par l'intermédiaire du ressort de mise à la masse (39) lors de l'assemblage de la plaque de bornes (18) sur le boîtier de valve pilote (17).
